# EUROPÄISCHE PATENTANMELDUNG

(11) **EP 2 055 506 A1**
(43) Veröffentlichungstag der Anmeldung: **06.05.2009**
(21) Anmeldenummer: 08163830.6
(22) Anmeldetag: 08.09.2008
(51) Int. Cl.: B60C 11/13

(54) **Laufflächenprofil eines Fahrzeugluftreifens mit Profilblockelementen**

(30) Priorität: 03.11.2007 DE 102007052579
(71) Anmelder: Continental Aktiengesellschaft, 30165 Hannover (DE)
(72) Erfinder: Wiese, Klaus, 30559 Hannover (DE); Bolz, Gerrit, 29308 Winsen (DE)
(74) Vertreter: Finger, Karsten

(57) **Zusammenfassung**

Laufflächenprofil eines Fahrzeugluftreifens mit Profilblockelementen (6,7,8,9,10) und mit die Profilblockelemente (6,7,8,9,10) jeweils begrenzenden Profilblockelementflanken, wobei zwischen zwei ein Profilblockelement (10) zu gegenüberliegenden Seiten hin begrenzenden Profilblockelementflanken an der die Bodenkontaktfläche bildenden radial äußeren Oberfläche des Profilblockelementes (10) ein erster in seiner Haupterstreckungsrichtung in der die Bodenkontaktfläche bildenden radial äußeren Oberfläche im Wesentlichen parallel zur Hauptausrichtung der beiden Profilblockelementflanken ausgerichteter Feineinschnitt (23) und zumindest auf der zwischen erstem Feineinschnitt (23) und einer der beiden Profilblockelementflanken ausgebildetem Erstreckungsbereich ein oder mehrere weitere im Wesentlichen parallel zueinander und zur Hauptausrichtung der beiden Profilblockelementflanken ausgerichteten Feineinschnitte (22,24) ausgebildet sind, wobei sich diese Feineinschnitte (22,24) jeweils durch das gesamte Profilblockelement (10) hindurch erstrecken und die Feineinschnitte (22,23,24) in Richtung senkrecht zu ihrer Haupterstreckungsrichtung das Profilblockelement (10) in mehrere, jeweils von einer der beiden Profilblockelementflanken und dem hierzu nächstgelegenen Feineinschnitt (22,24) bzw. von zwei jeweils zueinander benachbarten Feineinschnitten (22,23 und 23,24) begrenzten Profilblockelementabschnitte (26,29,27,28) unterteilen, dadurch gekennzeichnet,
dass in allen senkrecht zur Haupterstreckungsrichtung der Feineinschnitte (22,23,24) in der Bodenkontaktfläche und der beiden Profilblockelementflanken ausgebildeten Schnittebenen jeweils im gesamten Erstreckungsbereich eines jeden Profilblockelementabschnittes (26,29,27,28) die radiale Erstreckungshöhe der die Bodenkontaktfläche bildenden radial äußere Oberfläche ausgehend von einer ersten radialen Erstreckungshöhe R₁ an der zum ersten Feineinschnitt (23) weisenden Seite des Profilblockelementabschnittes (26,29,27,28) in Richtung zu der vom ersten Feineinschnitt (23) wegweisenden Seite des Profilblockelementabschnittes (26,29,27,28) bis zu einer zweiten radialen Erstreckungshöhe R₂ an der vom ersten Feineinschnitt (23) weg weisenden Seite des Profilblockelementabschnittes (26,29,27,28) hin stetig zunehmend ausgebildet ist.

## Beschreibung

Die Erfindung betrifft ein Laufflächenprofil eines Fahrzeugluftreifens mit Profilblockelementen und mit die Profilblockelemente jeweils begrenzenden Profilblockelementflanken, wobei zwischen zwei ein Profilblockelement zu gegenüberliegenden Seiten hin begrenzenden Profilblockelementflanken an der die Bodenkontaktfläche bildenden radial äußeren Oberfläche des Profilblockelementes ein erster in seiner Haupterstreckungsrichtung in der die Bodenkontaktfläche bildenden radial äußeren Oberfläche im Wesentlichen parallel zur Hauptausrichtung der beiden Profilblockelementflanken ausgerichteter Feineinschnitt und zumindest auf der zwischen erstem Feineinschnitt und einer der beiden Profilblockelementflanken ausgebildetem Erstreckungsbereich ein oder mehrere weitere im Wesentlichen parallel zueinander und zur Hauptausrichtung der beiden Profilblockelementflanken ausgerichteten Feineinschnitte ausgebildet sind, wobei sich diese Feineinschnitte jeweils durch das gesamte Profilblockelement hindurch erstrecken und die Feineinschnitte in Richtung senkrecht zu ihrer Haupterstreckungsrichtung das Profilblockelement in mehrere, jeweils von einer der beiden Profilblockelementflanken und dem hierzu nächstgelegenen Feineinschnitt bzw. von zwei zueinander benachbarten Feineinschnitten begrenzten Profilblockelementabschnitte unterteilen.

Derartige Fahrzeugreifen werden vielfach eingesetzt. Die Feineinschnitte derartiger Fahrzeugluftreifen ermöglichen zusätzliche Griffkanten im Profil und durch das Öffnen und Schließen der Feineinschnitte beim Abrollen eine Aufnahme von Schnee, wodurch durch die Griffkanten und die Versteifung nach Aufnahme des Schnees bereits recht gute Traktions- und Bremseigenschaften auf Schnee erzielt werden. Die radial äußere Oberfläche der Profilblockelementabschnitte ist dabei über den Umfang des Reifens hinweg jeweils mit gleicher radialer Erstreckung ausgebildet. Hierdurch kann sowohl bei Traktion als auch bei Bremsen ein ähnlich gutes Ergebnis erzielt werden, da der jeweils der durch die einwirkende Traktions- bzw. Bremskraft einwirkende hohe Druck zumindest im für den jeweiligen Belastungsfall relativ vordere Profilklotzbereich in etwa gleichmäßig stark belastet wird. Im Fall der Traktion ist dieser Bereich der in Drehrichtung vordere und im Fall des Bremsen der in Drehrichtung hintere Profilblockbereich. Aufgrund der Deformation des Profilblockelements bei der Krafteinwirkung wird jedoch ein großer für den jeweiligen Belastungsfall relativ hinterer Bereich des Profilklotzes (im Fall der Traktion ist dieser Bereich der in Fahrtrichtung vordere und im Fall des Bremsen der in Drehrichtung hintere Profilblockbereich) relativ stark entlastet, wodurch die Kontaktoberfläche und somit die Traktions- bzw. Bremswirkung reduziert wird.

Der Erfindung liegt die Aufgabe zugrunde, bei einem derartigen ein Laufflächenprofil eines Fahrzeugluftreifens mit Profilblockelementen und mit die Profilblockelemente jeweils begrenzenden Profilblockelementflanken, wobei zwischen zwei ein Profilblockelement zu gegenüberliegenden Seiten hin begrenzenden Profilblockelementflanken an der die Bodenkontaktfläche bildenden radial äußeren Oberfläche des Profilblockelementes ein erster in seiner Haupterstreckungsrichtung in der die Bodenkontaktfläche bildenden radial äußeren Oberfläche im Wesentlichen parallel zur Hauptausrichtung der beiden Profilblockelementflanken ausgerichteter Feineinschnitt und zumindest auf der zwischen erstem Feineinschnitt und einer der beiden Profilblockelementflanken ausgebildetem Erstreckungsbereich ein oder mehrere weitere im Wesentlichen parallel zueinander und zur Hauptausrichtung der beiden Profilblockelementflanken ausgerichteten Feineinschnitte ausgebildet sind, wobei sich diese Feineinschnitte jeweils durch das gesamte Profilblockelement hindurch erstrecken und die Feineinschnitte in Richtung senkrecht zu ihrer Haupterstreckungsrichtung das Profilblockelement in mehrere, jeweils von einer der beiden Profilblockelementflanken und dem hierzu nächstgelegenen Feineinschnitt bzw. von zwei zueinander benachbarten Feineinschnitten begrenzten Profilblockelementabschnitte unterteilen, in einfacher Weise die Kraftübertragung zwischen Reifenprofil und Schneeoberflächen bei beide senkrecht zur Haupterstreckungsrichtung der Feineinschnitte und einander entgegengesetzt gerichteten Belastungsfällen - insbesondere bei Traktion und Bremsen - weiter zu verbessern.

Erfindungsgemäß wird die Aufgabe durch die Ausbildung eines Laufflächenprofils eines Fahrzeugluftreifens mit Profilblockelementen und mit die Profilblockelemente jeweils begrenzenden Profilblockelementflanken, wobei zwischen zwei ein Profilblockelement zu gegenüberliegenden Seiten hin begrenzenden Profilblockelementflanken an der die Bodenkontaktfläche bildenden radial äußeren Oberfläche des Profilblockelementes ein erster in seiner Haupterstreckungsrichtung in der die Bodenkontaktfläche bildenden radial äußeren Oberfläche im Wesentlichen parallel zur Hauptausrichtung der beiden Profilblockelementflanken ausgerichteter Feineinschnitt und zumindest auf der zwischen erstem Feineinschnitt und einer der beiden Profilblockelementflanken ausgebildetem Erstreckungsbereich ein oder mehrere weitere im Wesentlichen parallel zueinander und zur Hauptausrichtung der beiden Profilblockelementflanken ausgerichteten Feineinschnitte ausgebildet sind, wobei sich diese Feineinschnitte jeweils durch das gesamte Profilblockelement hindurch erstrecken und die Feineinschnitte in Richtung senkrecht zu ihrer Haupterstreckungsrichtung das Profilblockelement in mehrere, jeweils von einer der beiden Profilblockelementflanken und dem hierzu nächstgelegenen Feineinschnitt bzw. von zwei zueinander benachbarten Feineinschnitten begrenzten Profilblockelementabschnitte unterteilen, gemäß den Merkmalen von Anspruch 1 dadurch gelöst, dass in allen senkrecht zur Haupterstreckungsrichtung der Feineinschnitte in der Bodenkontaktfläche und der beiden Profilblockelementflanken ausgebildeten Schnittebenen jeweils im gesamten Erstreckungsbereich zumindest der beiden jeweils von einer Profilblockelementflanke und dem hierzu nächstgelegenen Feineinschnitt unterteilten Profilblockelementabschnitte - insbesondere eines jeden Profilblockelementabschnittes - die radiale Erstreckungshöhe der die Bodenkontaktfläche bildenden radial äußere Oberfläche ausgehend von einer ersten radialen Erstreckungshöhe R₁ an der zum ersten Feineinschnitt weisenden Seite des Profilblockelementabschnittes in Richtung zu der vom ersten Feineinschnitt wegweisenden Seite des Profilblockelementabschnittes bis zu einer zweiten radialen Erstreckungshöhe R₂ an der vom ersten Feineinschnitt weg weisenden Seite des Profilblockelementabschnittes hin stetig zunehmend ausgebildet ist.

Jeder einzelne Profilblockelementabschnitt ist somit wie ein Sägezahn ausgebildet. In beiden Kraftrichtungen zur Übertragung von Kräften jeweils senkrecht zu den Feineinschnitten sind jeweils von den beiden Blockelementflanken in Richtung zum ersten Feineinschnitt die vorderen Profilblockelementabschnitte bis zum ersten Feineinschnitt mit abnehmender radialer Höhe ausgebildet. Die hauptbelasteten vorderen Bereiche sind in beiden Fällen mit erhöhtem Kantendruck belastet, wodurch die Griffwirkung der Griffkante verstärkt wird. Der hintere Bereich des Profilblockelements hat jeweils in beiden Belastungsfällen, bei denen der hintere Profilblockbereich deformiert wird, aufgrund der entgegengerichtet geneigten Oberfläche nach Deformation eine fast parallele Ausrichtung zur Straßenoberfläche, wodurch gerade in diesem hinteren Bereich flächiger Reibkontakt zur Straße ermöglicht wird. Die übertragbaren Kräfte in beide Belastungsrichtungen senkrecht zu den Feineinschnitten werden hierdurch weiter erhöht. Durch die gezielt eingestellte Sägezahnförmige Ausbildung wird darüber hinaus Schnee verstärkt in den Feineinschnittsbereich eingepresst. Die Schnee-Schneereibung kann hierdurch weiter erhöht, die Steifigkeit der Profilblockelementabschnitte und die Griffkantenwirkung im Schnee weiter verstärkt werden.

Besonders vorteilhaft ist die Ausbildung eines Laufflächenprofils gemäß den Merkmalen von Anspruch 2, wobei die Haupterstreckungsrichtung der beiden Profilblockelementflanken und die der Feineinschnitte ihre größte Richtungskomponente in axialer Richtung des Fahrzeugreifens aufweist. Hierdurch können in einfacher Weise sowohl die Traktions- als auch die Bremseigenschaften auf Schnee verbessert werden.

Besonders vorteilhaft ist die Ausbildung eines Laufflächenprofils gemäß den Merkmalen von Anspruch 3, wobei die Feineinschnitte des Profilblockelementes zumindest im Erstreckungsbereich des Profilblockelementes im Bereich der Bodenaufstandsfläche T_{WA} des Fahrzeugreifens in eine Umfangsrille des Fahrzeugreifens münden. Die so erzeugte höhere Beweglichkeit der Profilblockelementabschnitte führt zu einer besonders starken Ausprägung des Effektes.

Besonders vorteilhaft ist die Ausbildung eines Laufflächenprofils gemäß den Merkmalen von Anspruch 4, wobei die radiale Erstreckungshöhe der die Bodenkontaktfläche bildenden radial äußeren Oberfläche ausgehend von der ersten radialen Erstreckungshöhe R₁ an der zum ersten Feineinschnitt hin weisenden Seite des Profilblockelementabschnittes in Richtung zu der vom ersten Feineinschnitt wegweisenden Seite des Profilblockelementabschnittes bis zu der zweiten radialen Erstreckungshöhe R₂ an der vom ersten Feineinschnitt weg weisenden Seite des Profilblockelementabschnittes hin stetig - insbesondere linear - zunehmend ausgebildet ist. Die hintere Geometrie stellt den besten Kompromiss dar. Sowohl bei konvexen, als auch bei konkaven Verläufen ist die sich unter Verformung einstellende Profilblockelementverformung weniger günstig.

Besonders vorteilhaft ist die Ausbildung eines Laufflächenprofils gemäß den Merkmalen von Anspruch 5, wobei für die Differenz ΔR = (R₂ - R₁) aus zweiter radialer Erstreckungshöhe R₂ und erster radialer Erstreckungshöhe R₁ gilt: 0,2mm ≤ ΔR ≤ 2mm. Bei weniger als 0,2mm ist der Effekt nicht mehr nachweisbar. In diesem Bereich ist ein hinreichend wirkungsvoller Effekt nachweisbar.

Besonders vorteilhaft ist die Ausbildung eines Laufflächenprofils gemäß den Merkmalen von Anspruch 6, wobei für die in allen senkrecht zur Haupterstreckungsrichtung der Feineinschnitte in der Bodenkontaktfläche und der beiden Profilblockelementflanken ausgebildeten Schnittebenen gemessene Erstreckungsbreite a eines jeden Profilblockelementabschnittes gilt: 2mm ≤ a ≤ 10mm. In diesem Bereich ist eine optimale Kraftübertragung auf Schnee und trockener Fahrbahn möglich.

Die Erfindung wird im Folgenden an Hand der in den Figuren 1 bis 6 dargestellten Ausführungsbeispiele näher erläutert. Darin zeigen
- Fig. 1: Draufsicht auf einen Umfangsabschnitt eines Reifenprofils eines Fahrzeugluftreifens,
- Fig. 2: Schnittdarstellung eines Profilblockelementes von Fig. 1 in Schnittdarstellung II-II von Fig. 1,
- Fig. 3a bis e,: schematische Darstellung zur Erläuterung der unter Kraftwirkung bedingten Effekte an einem herkömmlichen Profilblockelement gemäß Stand der Technik,
- Fig. 4a bis e,: schematische Darstellung zur Erläuterung der unter Kraftwirkung bedingten Effekte an einem Profilblockelement Fig. 1 und Fig. 2,
- Fig. 5: Darstellung eines alternativen erfindungsgemäßen Profilblockelementes in Schnittdarstellung,
- Fig. 6: Darstellungen einer weiteren alternativen erfindungsgemäßer Profilblockelemente in Schnittdarstellung.

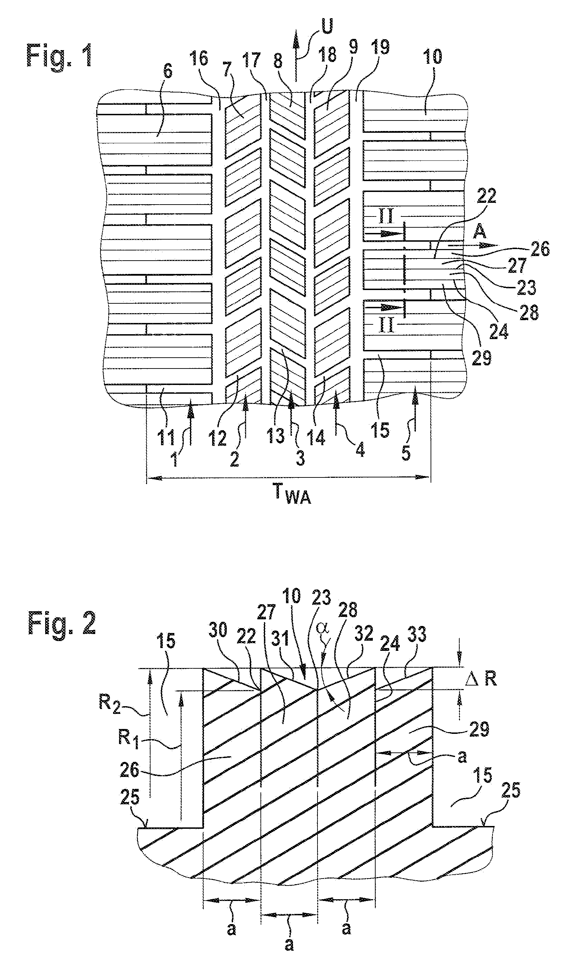

Figur 1 zeigt einen Umfangsabschnitt eines Laufflächenprofils eines Fahrzeugluftreifens mit Winterreifenprofil in Draufsicht. Eingetragen ist die Umfangsrichtung U sowie die axiale Richtung A des Fahrzeugluftreifens sowie die axiale Erstreckung T_{WA} der Bodenaufstandsfläche. Die eingetragene Umfangsrichtung U ist der Abrollrichtung des Fahrzeugluftreifens bei Vorwärtsfahrt am montierten Fahrzeug entgegengerichtet.

Das Laufflächenprofil ist mit einer in Figur 1 links dargestellten linken Schulterprofilblockreihe 1 ausgebildet, die sich über den gesamten Umfang des Fahrzeugluftreifens erstreckt und die in Umfangsrichtung U aus einer Vielzahl von in Umfangsrichtung U hintereinander angeordneten und jeweils durch eine Querrille 11 voneinander getrennten Profilblockelementen 6 ausgebildet ist. Durch eine über den gesamten Umfang des Fahrzeugluftreifens erstreckte Umfangsrille 16 ist axial von der Schulterprofilblockreihe 1 eine Profilblockreihe 12 getrennt ausgebildet, die sich über den gesamten Umfang des Fahrzeugluftreifens erstreckt und aus in Umfangsrichtung U hintereinander angeordneten und jeweils durch eine Querrille 12 voneinander getrennten Profilblockelementen 7 ausgebildet ist. Axial durch eine über den gesamten Umfang des Fahrzeugluftreifens erstreckte Umfangsrille 17 von der Profilblockreihe 2 getrennt ist eine über den gesamten Umfang des Fahrzeugluftreifens erstreckte Profilblockreihe 3 ausgebildet, die aus in Umfangsrichtung U hintereinander angeordneten und jeweils durch Querrillen 13 voneinander getrennten Profilblockelementen 8 ausgebildet ist. Axial durch eine über den gesamten Umfang des Fahrzeugluftreifens erstreckte Umfangsrille 18 getrennt von der Profilblockreihe 3 ist eine über den gesamten Umfang des Fahrzeugluftreifens erstreckte Profilblockreihe 4 ausgebildet, die aus in Umfangsrichtung U hintereinander angeordneten und jeweils durch Querrillen 14 voneinander getrennten Profilblockelementen 9 ausgebildet ist. Axial durch eine über den gesamten Umfang des Fahrzeugluftreifens erstreckte Umfangsrille 19 von der Profilblockreihe 4 getrennt ist eine in der Figur 1 rechte Schulterprofilblockreihe 5 ausgebildet, die sich über den gesamten Umfang des Fahrzeugluftreifens erstreckt und die aus in Umfangsrichtung hintereinander angeordneten und jeweils durch Querrillen 15 voneinander getrennten Profilblockelementen 10 ausgebildet ist.

Die Querrillen 12 verbinden die Umfangsrillen 16 und 17, die Querrillen 13 verbinden die Umfangsrillen 17 und 18 und die Querrillen 14 verbinden die Umfangsrillen 18 und 19.

Die Bodenaufstandsfläche erstreckt sich in axialer Richtung A über das Erstreckungsmaß T_{WA} von der linken Schulterprofilblockreihe 1 bis zur rechten Schulterprofilblockreihe 5.

Wie in den Figuren 1 und 2 zu erkennen ist, sind parallel zu den Querrillen 15 in den Profilblockelementen 10 der Schulterprofilblockreihe 5, parallel zu den Querrillen 11 in den Profilblockelementen 6 der Schulterprofilblockreihe 1, parallel zu den Querrillen 12 in den Profilblockelementen 7 der Profilreihe 2, parallel zu den Querrillen 13 in den Profilblockelementen 8 in der Profilblockreihe 3 und parallel zu den Querrillen 14 in den Profilblockelementen 9 der Profilblockreihe 4 jeweils mehrere in Umfangsrichtung U hintereinander angeordnete Feineinschnitte 22, 23 und 24 bekannter Art ausgebildet. Die in den Profilblockelementen 6 ausgebildeten Feineinschnitte 22, 23 und 24 erstrecken sich in axialer Richtung über die gesamte axiale Breite der Profilblockelemente 6 von der Umfangsrille 16 bis außerhalb der Bodenaufstandsbreite T_{WA}. Die Feineinschnitte 22, 23 und 24 der Profilblockelemente 7 erstrecken sich in axialer Richtung über die gesamte Breite der Profilblockelemente 7 ausgehend von der Umfangsrille 16 bis in die Umfangsrille 17. Die Feineinschnitte 22, 23 und 24 der Profilblockelemente 8 erstrecken sich über die gesamte axiale Breite der Profilblockelemente 8 ausgehend von der Umfangsrille 17 bis in die Umfangsrille 18. Die Feineinschnitte 22, 23 und 24 der Profilblockelemente 9 erstrecken sich über die gesamte axiale Breite der Profilblockelemente 9 ausgehend von der Umfangsrille 18 bis in die Umfangsrille 19. Die Feineinschnitte 22, 23 und 24 der Profilblockelemente 10 erstrecken sich über die gesamte axiale Breite der Profilblockelemente 10 ausgehend von der Umfangsrille 19 bis außerhalb der Bodenaufstandsfläche T_{WA}.

Wie am Beispiel der Profilblockelemente 10 der Schulterprofilblockreihe 5 in den Figuren 1 und 2 dargestellt, teilen die parallelen Feineinschnitte 22, 23 und 24 das Profilblockelement 10 in Umfangsrichtung U des Fahrzeugluftreifens in die Profilblockelementabschnitte 26, 27, 28 und 29. Wie in Fig. 2 dargestellt ist, erstrecken sich die Profilblockelementabschnitte 26, 27, 28 und 29 in Richtung quer zur Haupterstreckungsrichtung der Feineinschnitte 22, 23 und 24 jeweils mit einer Erstreckungsbreite a. Der Profilblockelementabschnitt 26 erstreckt sich dabei von der das Profilblockelement zur Rille 15 hin begrenzenden Profilblockelementflanke bis zum Feineinschnitt 22. Der Profilblockelementabschnitt 27 erstreckt sich vom Feineinschnitt 22 bis zum Feineinschnitt 23. Der Profilblockelementabschnitt 28 erstreckt sich vom Feineinschnitt 23 bis zum Feineinschnitt 24. Der Profilblockelementabschnitt 29 erstreckt sich vom Feineinschnitt 24 bis zu der das Profilblockelement 10 am Profilblockelementabschnitt 29 zur benachbarten Querrille 15 begrenzenden Profilblockelementflanke. Das Erstreckungsmaß a wird dabei in der Position der radial äußeren Mantelfläche des Profilblockelementes 10 gemessen. Die Erstreckungsbreite a ist dabei so gewählt, dass für a gilt: 2mm ≤ a ≤ 10mm.

Die radial äußere Mantelfläche 31 des an den Feineinschnitt 23 angrenzenden Profilblockelementabschnitts 27 ist - wie in Fig. 2 dargestellt ist - in Umfangsrichtung des Fahrzeugreifens gesehen ausgehend vom Feineinschnitt 23 in Richtung zu der das Profilblockelement 10 begrenzenden Querrillen 15 hin mit einer stetig zunehmenden radialen Erstreckungshöhe ausgebildet - ausgehend von einer radialen Erstreckungshöhe R₁ am Feineinschnitt 23 bis zu einer radialen Erstreckungshöhe R₂ am Feineinschnitt 22. Die radial äußere Mantelfläche 32 des an den Feineinschnitt 23 angrenzenden Profilblockelementabschnitts 28 ist - wie in Fig. 2 dargestellt ist - in Umfangsrichtung des Fahrzeugreifens gesehen ausgehend vom Feineinschnitt 23 in Richtung zu der das Profilblockelement 10 begrenzenden Querrillen 15 hin mit einer stetig zunehmenden radialen Erstreckungshöhe ausgebildet - ausgehend von einer radialen Erstreckungshöhe R₁ am Feineinschnitt 23 bis zu einer radialen Erstreckungshöhe R₂ am Feineinschnitt 24. Die radial äußere Mantelfläche 30 des an den Feineinschnitt 22 angrenzenden Profilblockelementabschnitts 26 ist - wie in Fig. 2 dargestellt ist - in Umfangsrichtung des Fahrzeugreifens gesehen ausgehend vom Feineinschnitt 22 in Richtung zu der das Profilblockelement 10 begrenzenden Querrillen 15 hin mit einer stetig zunehmenden radialen Erstreckungshöhe ausgebildet - ausgehend von einer radialen Erstreckungshöhe R₁ am Feineinschnitt 22 bis zu einer radialen Erstreckungshöhe R₂ an der das Profilblockelement 10 begrenzenden Rillenflanke der Querrille 15. Die radial äußere Mantelfläche 33 des an den Feineinschnitt 24 angrenzenden Profilblockelementabschnitts 29 ist - wie in Fig. 2 dargestellt ist - in Umfangsrichtung des Fahrzeugreifens gesehen ausgehend vom Feineinschnitt 24 in Richtung zu der das Profilblockelement 10 begrenzenden Querrillen 15 hin mit einer stetig zunehmenden radialen Erstreckungshöhe ausgebildet - ausgehend von einer radialen Erstreckungshöhe R₁ am Feineinschnitt 24 bis zu einer radialen Erstreckungshöhe R₂ an der das Profilblockelement 10 begrenzenden Rillenflanke der Querrille 15.

Die Differenz ΔR = (R₂ - R₁) aus zweitem radialen Erstreckungsmaß R₂ und erstem radialen Erstreckungsmaß R₁ ist dabei so gewählt, dass für ΔR gilt: 0,2mm ≤ ΔR ≤ 2mm.

In der dargestellten Ausführung sind in allen senkrecht zur Haupterstreckungsrichtung der Feineinschnitte 22, 23, und 24 gewählten Querschnitten - wie in Fig. 2 dargestellt - die das Profilblockelement 10 nach radial außen begrenzenden Oberflächen 30, 31, 32, 33 der Profilblockelementabschnitte 26, 27, 28 und 29 ausgehend vom Feineinschnitt 23 in Richtung zu den vom Feineinschnitt 23 wegweisenden Querrillen 15 hin gesehen jeweils linear steigend ausgebildet mit einem in der Position der maximalen Erstreckung der Profilblockelementabschnitte 26, 27, 28 und 29 ausgebildeten Steigungswinkel α zu der in der Position der maximalen Erstreckung der Profilblockelementabschnitte 26, 27, 28 und 29 jeweils ausgebildeten Tangente an die koaxial zum Fahrzeugluftreifen ausgebildeten zylindrischen Mantelfläche. Der Winkel α ist dabei so gewählt, dass für α gilt: 5° ≤ α ≤ 30°.

Wie in Fig. 2 zu erkennen ist, weist das Profilblockelement 10 auf diese Weise beiderseits des Feineinschnitts 23 jeweils in den senkrecht zur Haupterstreckungsrichtung der Feineinschnitte 22, 23, und 24 gewählten Querschnitten an seiner nach radial außen gerichteten Mantelfläche eine am Feineinschnitt 23 gespiegelte Sägezahnkontur auf.

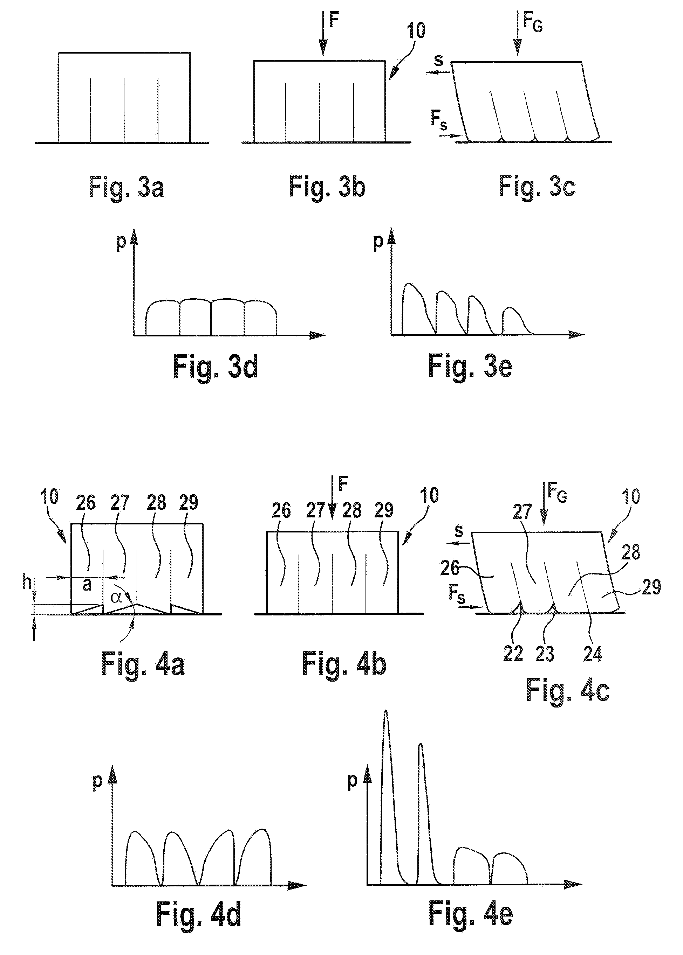

Fig. 3a zeigt schematisch ein herkömmliches Profilblockelement gemäß Stand der Technik mit mehreren Feineinschnitten, das ohne Last in reinem Berührkontakt zur Straßenoberfläche steht.

Fig. 3b zeigt das herkömmliche Profilblockelement unter Berücksichtigung der vom Fahrzeug ausgeübten vertikal auf die Straße gerichteten Gewichtskraft F_{G}. Fig. 3d zeigt die dabei erhaltene Bodenkontaktdruckverteilung. Fig. 3d zeigt deutlich, dass bei allen vier Profilblockelementabschnitten nahezu gleicher Bodenkontaktdruck erzeugt wird und dass dieser sich über die vier Profilblockelementabschnitte auch weitgehend gleichmäßig verteilt.

Fig. 3c zeigt dieses herkömmliche Profilblockelement unter Berücksichtigung der Gewichtskraft F_{G} und einer zusätzlich Scherkraft F_{S}, beispielsweise einer Traktions- oder Bremskraft. Fig. 3e zeigt die dabei erhaltene Bodenkontaktdruckverteilung. Wie deutlich in Fig. 3c und Fig. 3e zu erkennen ist, wird dabei jeder einzelne Profilblockelementabschnitt an einer Seite stark auf der Bodenkontaktfläche angepresst und auf der anderen Seite durch Deformation regelrecht von der Bodenkontaktfläche abgehoben. In Fig. 3c ist die Blockbewegungsrichtung S eingezeichnet. Der in Blockbewegungsrichtung S vordere Profilblockelementabschnitt steht dabei aufgrund der gegenseitigen Stützwirkung der Profilblockelementabschnitte noch mit einem relativ großen Bereich in Berührkontakt zur Straßenoberfläche. Der in Blockbewegungsrichtung S letzte Profilblockelementabschnitt ist aufgrund der fehlenden weiteren Stützwirkung eines nachfolgenden Profilblockelementabschnittes in einem großen Erstreckungsbereich kontaktlos zur Straßenoberfläche. Fig. 3e zeigt die Bodenkontaktdruckverteilung des in Fig. 3c dargestellten Falls. Dabei ist deutlich zu erkennen, dass von links nach rechts die Lücken des fehlenden Kontaktes immer größer und der Bodenkontaktdruck in den noch vorhandenen Bereichen mit Bodenkontakt immer geringer werden.

Die Figuren Fig.4a bis Fig.4e zeigen die analog zu den Figuren Fig.3a bis Fig.3e erhaltenen Darstellungen an Hand des erfindungsgemäßen Profilblockelements der Figuren 1 und 2.

Fig. 4a zeigt dabei zunächst wiederum schematisch das Profilblockelement von Fig. 2 mit mehreren Feineinschnitten, das ohne Last in reinem Berührkontakt zur Straßenoberfläche steht. Fig. 4b zeigt das Profilblockelement von Fig. 2 unter Berücksichtigung der vom Fahrzeug ausgeübten vertikal auf die Straße gerichteten Gewichtskraft F_{G}. Fig. 4d zeigt deutlich, dass bei allen vier Profilblockelementabschnitten nahezu gleicher Bodenkontaktdruck erzeugt wird und dass dieser sich über die vier Profilblockelementabschnitte auch weitgehend gleichmäßig verteilt.

Fig. 4c zeigt das Profilblockelement von Fig. 2 unter Berücksichtigung der Gewichtskraft F_{G} und einer zusätzlich Scherkraft F_{S}, beispielsweise einer Traktions- oder Bremskraft. Fig. 4e zeigt die dabei erhaltene Bodenkontaktdruckverteilung.

Fig. 4c ist dabei deutlich entnehmbar, dass die beiden in Blockbewegungsrichtung S gesehen vorderen beiden Profilblockelementabschnitte 26 und 27 jeweils über einen relativ weiten Erstreckungsbereich in Bodenkontakt stehen.

Fig. 4e ist dabei zu entnehmen, dass in diesem Bereich ein sehr hoher Bodenkontaktdruck aufgebaut wird. Dies bewirkt einen zusätzlichen einschneidenden Griffkontakt des Profilblockelementes 10 in eine mit Schnee, Schlamm oder Matsch bedeckte Straßenoberfläche. In die beiden in Fig. 4c zu erkennenden kontaktfreien Bereiche der beiden in Blockbewegungsrichtung S gesehen vorderen Profilblockelementabschnitte 26 und 27 wird - in den Figuren nicht dargestellt - zusätzlich Schnee, Schlamm oder Matsch aufgenommen, wodurch der Einpressdruck des Schnees in die Feineinschnitte 22 und 23 zusätzlich erhöht wird. Wie in Fig. 4c weiter zu erkennen ist, sind die in Blockbewegungsrichtung S hinteren Profilblockelementabschnitte 28 und 29 trotz Deformation in Folge ihrer entgegengesetzt zur Sägezahnkontur der vorderen Profilblockelementabschnitte 26 und 27 ausgebildeten Sägezahnkontur über ihre gesamte Erstreckungslänge in Bodenkontakt zur Straßenoberfläche und bewirken - wie Fig. 4e zu entnehmen ist - dabei fast über ihre vollständige Erstreckung die Aufrechterhaltung eines nahezu gleichmäßigen Bodenkontaktdruckes. Hierdurch bewirkt der in Blockbewegungsrichtung S hintere Bereich des Profilblockelementes 10 einen zusätzlichen Reibkontakt zur Erhöhung der Kraftübertragung. Dies kann besonders bei Fahrten auf mit Eis bedeckter Straße, aber auch auf nasser und trockener Straße von Bedeutung sein.

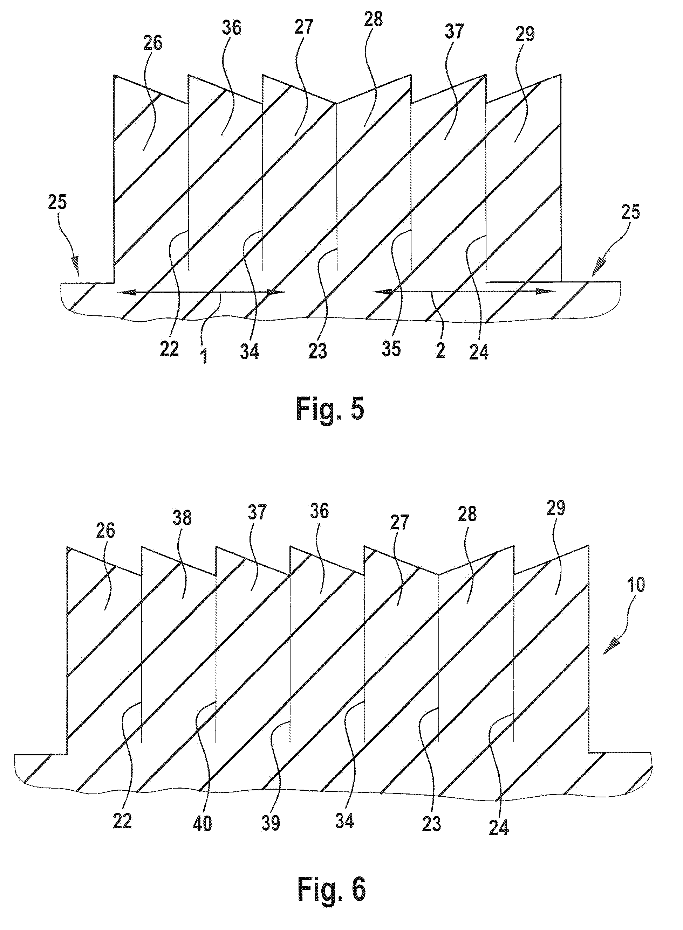

Fig. 5 zeigt eine alternative Ausbildung des Profilblockelementes 10, das gegenüber dem in Fig. 1 und 2 dargestellten Profilblockelement 10 beiderseits des Feineinschnitts 23 mit zusätzlichen Feineinschnitten 34 und 35 und analog zu den Profilblockelementabschnitten 27 und 28 ausgebildeten zusätzliche Profilblockelementabschnitte 36 und 37 ausgebildet ist.

In einer weiteren - nicht dargestellten - alternativen Ausbildung, ist bei der in Fig.5 dargestellten Ausbildung der Winkel α der beiden Profilblockelementabschnitte 36 und 37 mit α = 0° ausgebildet. Ansonsten entspricht diese Ausbildung der in Fig. 5 gezeigten Ausbildung.

Fig. 6 zeigt eine weitere alternative Ausbildung des Profilblockelementes 10, das gegenüber dem in Fig. 1 und 2 dargestellten Profilblockelement 10 zu einer Seite des Feineinschnitts 23 mit drei zusätzlichen Feineinschnitten 34, 39 und 40 und analog zu den Profilblockelementabschnitten 27 ausgebildeten drei zusätzlichen Profilblockelementabschnitte 36, 37 und 38 ausgebildet ist.

### Bezugszeichenliste

### (Teil der Beschreibung)

- 1: Schulterprofilblockreihe
- 2: Profilblockreihe
- 3: Profilblockreihe
- 4: Profilblockreihe
- 5: Schulterprofilblockreihe
- 6: Profilblockelement
- 7: Profilblockelement
- 8: Profilblockelement
- 9: Profilblockelement
- 10: Profilblockelement
- 11: Querrille
- 12: Querrille
- 13: Querrille
- 14: Querrille
- 15: Querrille
- 16: Umfangsrille
- 17: Umfangsrille
- 18: Umfangsrille
- 19: Umfangsrille
- 20: Radial äußere Mantelfläche
- 21: Rillenwand
- 22: Feineinschnitt
- 23: Feineinschnitt
- 24: Feineinschnitt
- 25: Rillengrund
- 26: Profilblockelementabschnitt
- 27: Profilblockelementabschnitt
- 28: Profilblockelementabschnitt
- 29: Profilblockelementabschnitt
- 30: Radiale Mantelfläche
- 31: Radiale Mantelfläche
- 32: Radiale Mantelfläche
- 33: Radiale Mantelfläche
- 34: Feineinschnitt
- 35: Feineinschnitt
- 36: Profilblockelementabschnitt
- 37: Profilblockelementabschnitt
- 38: Profilblockelementabschnitt
- 39: Feineinschnitt
- 40: Feineinschnitt

## Patentansprüche

1. Laufflächenprofil eines Fahrzeugluftreifens mit Profilblockelementen (6,7,8,9,10) und mit die Profilblockelemente (6,7,8,9,10) jeweils begrenzenden Profilblockelementflanken, wobei zwischen zwei ein Profilblockelement (10) zu gegenüberliegenden Seiten hin begrenzenden Profilblockelementflanken an der die Bodenkontaktfläche bildenden radial äußeren Oberfläche des Profilblockelementes (10) ein erster in seiner Haupterstreckungsrichtung in der die Bodenkontaktfläche bildenden radial äußeren Oberfläche im Wesentlichen parallel zur Hauptausrichtung der beiden Profilblockelementflanken ausgerichteter Feineinschnitt (23) und zumindest auf der zwischen erstem Feineinschnitt (23) und einer der beiden Profilblockelementflanken ausgebildetem Erstreckungsbereich ein oder mehrere weitere im Wesentlichen parallel zueinander und zur Hauptausrichtung der beiden Profilblockelementflanken ausgerichteten Feineinschnitte (22,24) ausgebildet sind, wobei sich diese Feineinschnitte (22,24) jeweils durch das gesamte Profilblockelement (10) hindurch erstrecken und die Feineinschnitte (22,23,24) in Richtung senkrecht zu ihrer Haupterstreckungsrichtung das Profilblockelement (10) in mehrere, jeweils von einer der beiden Profilblockelementflanken und dem hierzu nächstgelegenen Feineinschnitt (22,24) bzw. von zwei jeweils zueinander benachbarten Feineinschnitten (22,23 und 23,24) begrenzten Profilblockelementabschnitte (26,29,27,28) unterteilen,
**dadurch gekennzeichnet,**
**dass** in allen senkrecht zur Haupterstreckungsrichtung der Feineinschnitte (22,23,24) in der Bodenkontaktfläche und der beiden Profilblockelementflanken ausgebildeten Schnittebenen jeweils im gesamten Erstreckungsbereich zumindest der beiden jeweils von einer Profilblockelementflanke und dem hierzu nächstgelegenen Feineinschnitt (22,24) unterteilten Profilblockelementabschnitte (26,29) - insbesondere eines jeden Profilblockelementabschnittes (26,29,27,28) - die radiale Erstreckungshöhe der die Bodenkontaktfläche bildenden radial äußere Oberfläche ausgehend von einer ersten radialen Erstreckungshöhe R₁ an der zum ersten Feineinschnitt (23) weisenden Seite des Profilblockelementabschnittes (26,29,27,28) in Richtung zu der vom ersten Feineinschnitt (23) wegweisenden Seite des Profilblockelementabschnittes (26,29,27,28) bis zu einer zweiten radialen Erstreckungshöhe R₂ an der vom ersten Feineinschnitt (23) weg weisenden Seite des Profilblockelementabschnittes (26,29,27,28) hin stetig zunehmend ausgebildet ist.

2. Laufflächenprofil gemäß den Merkmalen von Anspruch 1,
wobei die Haupterstreckungsrichtung der beiden Profilblockelementflanken und die der Feineinschnitte (22,23,24) ihre größte Richtungskomponente in axialer Richtung des Fahrzeugreifens aufweist.

3. Laufflächenprofil gemäß den Merkmalen von Anspruch 1 oder 2,
wobei die Feineinschnitte (22,23,24) des Profilblockelementes (10) zumindest im Erstreckungsbereich des Profilblockelementes (10) im Bereich der Bodenaufstandsfläche T_{WA} des Fahrzeugreifens in eine Umfangsrille (19) des Fahrzeugreifens münden.

4. Laufflächenprofil gemäß den Merkmalen von einem oder mehreren der vorangegangenen Ansprüche,
wobei die radiale Erstreckungshöhe der die Bodenkontaktfläche bildenden radial äußere Oberfläche ausgehend von der ersten radialen Erstreckungshöhe R₁ an der zum ersten Feineinschnitt (23) hin weisenden Seite des Profilblockelementabschnittes (26,29,27,28) in Richtung zu der vom ersten Feineinschnitt (23) wegweisenden Seite des Profilblockelementabschnittes (26,29,27,28) bis zu der zweiten radialen Erstreckungshöhe R₂ an der vom ersten Feineinschnitt (23) weg weisenden Seite des Profilblockelementabschnittes (26,29,27,28) hin stetig - insbesondere linear - zunehmend ausgebildet ist.

5. Laufflächenprofil gemäß den Merkmalen von einem oder mehreren der vorangegangenen Ansprüche,
wobei für die Differenz ΔR = (R₂ - R₁) aus zweiter radialer Erstreckungshöhe R₂ und erster radialer Erstreckungshöhe R₁ gilt: 0,2mm ≤ ΔR ≤ 2mm.

6. Laufflächenprofil gemäß den Merkmalen von einem oder mehreren der vorangegangenen Ansprüche,
wobei für die in allen senkrecht zur Haupterstreckungsrichtung der Feineinschnitte (22,23,24) in der Bodenkontaktfläche und der beiden Profilblockelementflanken ausgebildeten Schnittebenen gemessene Erstreckungsbreite a eines jeden Profilblockelementabschnittes (26,29,27,28) gilt: 2mm ≤ a ≤ 10mm.
